# EUROPEAN PATENT APPLICATION

(11) **EP 4 765 892 A1**
(43) Date of publication of application: **24.06.2026**
(21) Application number: 24460044.1
(22) Date of filing: 20.12.2024
(51) Int. Cl.: H04W 4/14, H04W 4/90, G08B 21/10, G08B 25/00, G08B 25/10, H04W 4/02

(54) **PHOTOALERT**

(71) Applicant: Strzyzewski, Rafael, 55-020 Zorawina (PL)
(72) Inventor: Strzyzewski, Rafael, 55-020 Zorawina (PL)

(57) **Abstract**

A reporting system for emergency and compliance purposes enabling two-way communication between the operator and the reporting party, without requiring any application installation. During the call, the operator can send a link that allows the sender to share real-time location, photos, and a description of the situation. The system enables verification and classification of the report and forwards the case to appropriate entities. The solution can be applied across public, municipal, or commercial sectors, enhancing the speed and efficiency of response to field events.

## Description

### 2. Technical Field

The invention relates to **systems and methods of real-time communication between individuals and authorized public or municipal institutions.** In particular, it concerns a **non-app-based, operator-supported** solution for **sending, verifying, and documenting situational alerts** using multimedia elements such as photos, location data, and descriptions.

### 3. Background of the Invention (State of the Art)

Current systems used by municipal authorities and emergency services rely primarily on two forms of communication:
- Traditional hotlines (e.g., 112, 986), which offer **voice-based communication.**
- Dedicated **mobile applications,** which require installation, user accounts, and often exclude a large portion of the population due to digital exclusion.

Such applications frequently suffer from:
- **Low installation rates,**
- **Anonymity and abuse,**
- **Lack of operator support for real-time verification.**

There exists a **technological gap** for a solution that allows rapid, operator-verified communication without the need for downloading any app.

### 4. Problem to Be Solved

The aim is to develop a **transparent, secure, and fast communication channel** that:
- Is **easy to use** by citizens (even those digitally excluded),
- **Does not require downloading any software or registration,**
- Allows **real-time verification** by an operator,
- Supports **multimedia content (photos, location, text),**
- Can be used by municipalities, public institutions, and rescue services.

### 5. Summary of the Invention (Solution Provided)

**PhotoAlert** is a system that allows authorized operators (e.g., city guards, social services, municipal units) to **initiate a communication** with a citizen or resident by sending a **secure SMS link** that opens a **web-based interface.**

### Key features include:

- **No installation required** - only a smartphone with internet access is needed.
- **Secure, time-limited links** to report a situation.
- **User response includes:**
   ∘ A photograph (automatically time-stamped),
   ∘ GPS-based location data,
   ∘ Short textual description.
- **Operator console** for:
   ∘ Real-time monitoring,
   ∘ Logging communication and response,
   ∘ Verifying or archiving reports.

This is **not an app,** but a **browser-based communication tool with human operator interaction,** ensuring accuracy and accountability.

### 6. Advantages Over Existing Technologies

- **Higher trust level** due to operator presence.
- **Immediate response** possible in unexpected situations (e.g., natural disasters, emergencies, social control).
- **Low barrier of entry** - accessible to everyone.
- **Supports official duties** (law enforcement, social services, city services).
- **Integrates with existing platforms** (e.g., *eMandat*).
- **In compliance with the Civil Protection and Population Safety Act (2023/2025 Poland).**
- **Documented implementation** in cities: Nowogrodziec, G 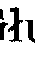 ucho 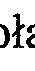 azy, Otmuchów, Czechowice-Dziedzice (May 2025) and others in progress.

### 7. Implementation Example

A city official sends a PhotoAlert request to a citizen. The citizen, upon receiving the SMS, opens a secure browser-based form, takes a photo of a flood area, and submits it along with their location. The system logs the entire interaction, which can then be used by city services for resource allocation or incident reporting.

### 8. Claims Overview (Optional Preview)

### (Full claims to be submitted separately.)

- Claim 1: A system for real-time, operator-verified visual reporting using secure browser-based SMS links.
- Claim 2-10: Communication protocol, data verification, user interface, integration with municipal databases, anti-abuse tracking, etc.

## Claims

1. A system for real-time, operator-supported incident reporting and verification, comprising:
(a) a central server with a secure communication interface;
(b) an operator console allowing manual initiation of alert requests;
(c) a web-based reporting form accessible via a secure SMS link;
(d) functionalities enabling a user to send a photo, location data, and description;
(e) a database for storing and timestamping the report for future reference;
wherein the system allows for human operator intervention during or after submission for verification and further action.

2. The system of claim 1, wherein the secure link is automatically expired after a predetermined time period (e.g., 15 minutes).

3. The system of claim 1, wherein the photo is geotagged and timestamped automatically by the device.

4. The system of claim 1, wherein no software installation or registration is required from the user.

5. The system of claim 1, wherein the user interface is automatically adapted to the language and device type of the user.

6. The system of claim 1, wherein the operator can monitor live whether the user has opened the message and started submission.

7. The system of claim 1, wherein alerts can be sent proactively (by operator) or reactively (by citizen via a public access point).

8. The system of claim 1, wherein the data is stored in an encrypted, verifiable audit trail format.

9. The system of claim 1, wherein integration with municipal systems such as ticketing, social services or public safety platforms is possible.

10. The system of claim 1, wherein an alert can include multiple media types including photo, location, and written text.

11. The system of claim 1, wherein a follow-up action can be initiated directly from the operator panel.

12. The system of claim 1, wherein the interface supports accessibility standards (e.g., WCAG 2.1).

13. The system of claim 1, wherein different levels of urgency are selectable during submission.

14. The system of claim 1, wherein automatic alerts are sent to other systems or services upon confirmation by the operator.

15. The system of claim 1, wherein the platform maintains logs of all operator-citizen interactions in a secure format.
